# EUROPÄISCHE PATENTANMELDUNG

(11) **EP 1 503 561 A2**
(43) Veröffentlichungstag der Anmeldung: **02.02.2005**
(21) Anmeldenummer: 04008661.3
(22) Anmeldetag: 10.04.2004
(51) Int. Cl.: H04L 29/06

(54) **Sicheres, drahtloses Kommunikationssystem**

(30) Priorität: 28.07.2003 DE 10334322
(71) Anmelder: Insta Elektro GmbH, 58511 Lüdenscheid (DE)
(72) Erfinder: Mundinger, Harald, Dipl.-Ing., 58849 Herscheid (DE)

(57) **Zusammenfassung**

Es wird ein elektrisches/elektronisches System vorgeschlagen, welche im Wesentlichen aus zumindest einem Grundgerät und zumindest einem Partnergerät besteht, zwischen welchem drahtlos Informationen bzw. Daten ausgetauscht werden. Zu dem Zweck, ein elektrisches/elektronisches System zu schaffen, welches bei einfacher Handhabung ein hohes Maß an Abhörsicherheit gewährleistet, verfügt zumindest ein Grundgerät über eine Erzeugungseinrichtung zur zufälligen Erzeugung einer Identifikationskennung und über zumindest eine Ausgabeeinrichtung zur Ausgabe der Identifikationskennung und weist zumindest ein Partnergerät zumindest eine Eingabeeinrichtung zur manuellen Eingabe der zufällig erzeugten Identifikationskennung auf.

## Beschreibung

Die vorliegende Erfindung geht von einem gemäß dem Oberbegriff des Hauptanspruches konzipierten elektrischen/elektronischen System aus.

Mobilfunktelefone, Headsets, PDAs, PCs, PALMs usw. sind oftmals als derartige elektrische/elektronische Systeme vernetzt. Eine Funkverbindung wird dabei oftmals zum Informations- bzw. Datenaustausch benutzt. In vielen Fällen ist die Funkverbindung als sogenannte Bluetooth-Verbindung ausgebildet. Um die miteinander in Verbindung stehenden Geräte eines solchen elektrischen/elektronischen Systems gegen Abhören zu sichern, sind aufwendige Verschlüsselungsverfahren Stand der Technik. Um die zu verbindenden Geräte aufeinander abzustimmen muss oftmals zunächst manuell eine Identifikationskennung in Form einer PIN in zumindest eines der Geräte eingegeben werden. Oft sind zu diesem Zweck standardmäßig eingestellte und einfach aufgebaute PINs, wie z. B. - 1234 - vorgesehen bzw. einzugeben oder aber es ist eine PIN auf zumindest einem der Geräte als wiederentfernbarer Klebestreifen vorhanden. Diese Ausführung, solcher allgemein bekannten elektrischen/elektronischen Systeme führt aber nicht nur zu einem erheblich höheren Risiko bezüglich der Abhörsicherheit, weil die PIN einfach erraten bzw. abgelesen werden kann, sondern ist bei korrekter Durchführung mit der Einstellung bzw. der Eingabe einer komplex aufgebauten PIN entsprechend umständlich in der Handhabung.

Ausgehend von einer solchen Situation liegt der vorliegenden Erfindung die Aufgabe zugrunde, ein elektrisches/elektronisches System zu schaffen, welches bei einfacher Handhabung auch einer komplex aufgebauten PIN ein hohes Maß an Abhörsicherheit gewährleistet.

Erfindungsgemäß wird diese Aufgabe durch die im Hauptanspruch angegebenen Merkmale gelöst.

Bei einer solchen Ausbildung ist besonders vorteilhaft, dass durch die Erzeugungseinrichtung, wann immer notwendig zufällig eine neue Identifikationskennung erzeugt wird, welche vom Benutzer unter direkter Anleitungshilfe lediglich in das Partnergerät bzw. in die Partnergeräte zur Identifikation manuell eingegeben werden muss.

Weitere vorteilhafte Ausgestaltungen des erfindungsgemäßen Gegenstandes sind in den Unteransprüchen angegeben. Anhand eines Blockschaltbildes sei die Erfindung im Prinzip näher erläutert. Dabei zeigt:
das Blockschaltbild ein elektrisches/elektronisches System mit einem Grundgerät und mit einem Partnergerät.

Wie aus dem Blockschaltbild hervorgeht, weist das Grundgerät 1 eine Erzeugungseinrichtung 4 auf, welche zur zufälligen Erzeugung einer Identifikationskennung 5, z. B. - q32t2V - vorgesehen ist. Über die Aktivierungstaste 6 kann bei Bedarf jederzeit basierend auf dem Zufälligkeitsprinzip eine neue, komplex aufgebaute Identifikationskennung 5 abgerufen werden. Weil die Identifikationskennung 5 zufällig erzeugt wird und komplex als mehrstellige Zeichenfolge ausgeführt ist, ist die Voraussetzung für eine besonders hohe Abhörsicherheit gewährleistet. Wahlweise kann die Identifikationskennung 5 über eine als Bildschirm bzw. LC-Display ausgeführte erste Ausgabeeinrichtung 7 und/oder über eine als Lautsprecher ausgeführte zweite Ausgabeeinrichtung 8 optisch angezeigt, bzw. akustisch ausgestrahlt werden.

Zur Identifikation kann der Benutzer 10 nun auf einfache Art und Weise die angezeigte und/oder angesagte Identifikationskennung 5 unter direkter Anleitung in das Partnergerät 2 eingeben. Dies kann der Benutzer 10 entweder über die als Tastenfeld ausgeführte erste Eingabeeinrichtung 11 oder aber über das mit einem Mikrofon versehene Spracherkennungsmodul der zweiten Eingabeeinrichtung 12 bewerkstelligen. Über die Betätigung einer Sendetaste 13 wird der Prozess der gegenseitigen Authentifizierung der Geräte (Pairing) unter Zuhilfenahme der gemeinsamen Identifikationskennung 5 eingeleitet.

Der Benutzer 10 kann also bei einem solchermaßen ausgebildeten elektrischen/elektronischen System auf besonders einfache und bequeme Art und Weise eine abhörsichere Verbindung zwischen einem Grundgerät 1 bzw. mehreren Grundgeräten und einem Partnergerät 2 bzw. mehreren Partnergeräten schaffen.

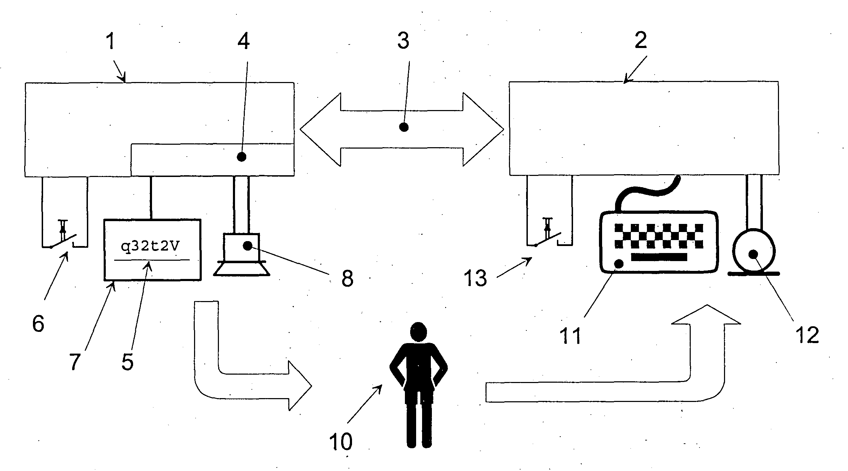

## Patentansprüche

1. Elektrisches/elektronisches System, mit zumindest einem Grundgerät, welches drahtlos Informationen bzw. Daten mit zumindest einem Partnergerät austauscht, wobei zur Ermöglichung des verschlüsselten Informations- bzw. Datenaustausches zwischen den beiden Geräten vorher zumindest ein gemeinsames Geheimnis in Form einer Identifikationskennung ausgetauscht werden muss, **dadurch gekennzeichnet, dass** zumindest ein Grundgerät (1) über eine Erzeugungseinrichtung (4) zur zufälligen Erzeugung einer Identifikationskennung (5) und über zumindest eine Ausgabeeinrichtung (7, 8) zur Ausgabe der Identifikationskennung (5) verfügt, und dass zumindest ein Partnergerät (2) zumindest eine Eingabeeinrichtung (11, 12) zur manuellen Eingabe der zufällig erzeugten Identifikationskennung (5) aufweist.

2. Elektrisches/elektronisches System nach Anspruch 1, **dadurch gekennzeichnet, dass** die Identifikationskennung (5) als mehrstellige Zeichenfolge ausgeführt ist.

3. Elektrisches/elektronisches System nach einem der Ansprüche 1 oder 2, **dadurch gekennzeichnet, dass** zumindest eine erste Ausgabeeinrichtung (7) zur optischen Darstellung der Identifikationskennung (5) vorgesehen ist.

4. Elektrisches/elektronisches System nach einem der Ansprüche 1 bis 3, **dadurch gekennzeichnet, dass** zumindest eine zweite Ausgabeeinrichtung (8) zur akustischen Ausgabe der Identifikationskennung (5) vorgesehen ist.

5. Elektrisches/elektronisches System nach einem der Ansprüche 1 bis 4, **dadurch gekennzeichnet, dass** zumindest eine erste Eingabeeinrichtung (11) zur manuellen Eingabe der Identifikationskennung (5) als Tastenfeld ausgebildet ist.

6. Elektrisches/elektronisches System nach einem der Ansprüche 1 bis 5, **dadurch gekennzeichnet, dass** zumindest eine zweite Eingabeeinrichtung (12) zur manuellen Eingabe der Identifikationskennung (5) als Spracherkennungseinrichtung ausgebildet ist.
